# EUROPÄISCHE PATENTSCHRIFT

(11) **EP 3 184 916 B1**
(45) Veröffentlichungstag und Bekanntmachung des Hinweises auf die Patenterteilung: **19.03.2025**
(21) Anmeldenummer: 16002711.6
(22) Anmeldetag: 21.12.2016
(51) Int. Cl.: F24D 19/10, G05D 7/01

(54) **STELLVENTILEINRICHTUNG, STRÖMUNGSMENGENREGLER UND HEIZUNG-BRAUCHWASSER-ANLAGE**
POSITIONING VALVE DEVICE, FLOW RATE CONTROLLER AND HEATING SERVICE WATER INSTALLATION
DISPOSITIF DE SOUPAPE DE RÉGLAGE, RÉGULATEUR DE DÉBIT ET INSTALLATION DE CHAUFFE-EAU SANITAIRE

(30) Priorität: 24.12.2015 DE 102015016747; 20.01.2016 DE 102016000466; 05.07.2016 DE 102016008097
(43) Veröffentlichungstag der Anmeldung: 28.06.2017
(73) Patentinhaber: Uponor Innovation AB, 73061 Virsbo (SE)
(72) Erfinder: Geck, Thomas, DE - 30559 Hannover (DE)
(74) Vertreter: Fenner, Seraina

(56) Entgegenhaltungen:
- DE-U1- 20 209 476
- US-A- 1 339 798
- US-A- 5 918 621
- US-A1- 2002 062 867
- US-A1- 2007 039 653

## Beschreibung

Die Erfindung betrifft eine Stellventileinrichtung eines Strömungsmengenreglers eines Brauchwasserkreislaufs einer Heizung-Brauchwasser-Anlage mit einem durch einen Brauchwasservolumenstrom ansteuerbaren Brauchwassersteuerkolben und mit einem Arbeitszylinder zum Betätigen des Brauchwassersteuerkolbens, bei welcher innerhalb des Arbeitszylinders ein Trennelement angeordnet ist, um einen mit dem Brauchwasserkreislauf fluidisch verbundenen Arbeitsraum innerhalb des Arbeitszylinders räumlich abzutrennen.

Die Erfindung betrifft des Weiteren einen Strömungsmengenregler mit Stellventileinrichtungen zum Regeln von Fluidvolumenströmen einer Heizung-Brauchwasser-Anlage.

Die Erfindung betrifft auch eine Heizung-Brauchwasser-Anlage zum Erwärmen von Brauchwasser mit einem Strömungsmengenregler zum Regeln eines Heizwasservolumenstroms in Abhängigkeit von einem an wenigstens einer Zapfstelle angeforderten Brauchwasservolumenstrom.

Gattungsgemäße Stellventileinrichtungen bzw. diesbezügliche Strömungsmengenregler einer Heizung-Brauchwasser-Anlage sind aus dem Stand der Technik bereits hinlänglich bekannt.

Mithilfe solcher Stellventileinrichtungen werden insbesondere Brauchwasservolumenströme an einer Heizung-Brauchwasser-Anlage gemessen und eingestellt bzw. geregelt, so dass mittels entsprechend ausgerüsteter Strömungsmengenregler in Abhängigkeit von einer an einer Zapfstelle angeforderten Menge an warmen Brauchwasser eine entsprechende Menge eines Heizmediums an einem Wärmeübertrager zum Erwärmen dieses Brauchwassers bereitgestellt wird, um eben das den Wärmeübertrager durchströmende Brauchwasser in ausreichendem Maße betriebssicher zu erwärmen.

Ein gattungsgemäßer Strömungsmengenregler mit einer im Sinne der Erfindung arbeitenden Stellventileinrichtung ist beispielhaft in der DE 20 2008 006 054 U1 beschrieben, in welcher hinsichtlich des Strömungsmengenreglers eine verbesserte Dichtungsanordnung zum fluidischen Trennen eines Brauchwasserströmungswegs und eines Heizmediumströmungswegs vorgeschlagen ist.

Dokument DE 20209476 U1 zeigt eine Stellventileinrichtung mit den Merkmalen des Oberbegriffs von Anspruch 1.

Der Erfindung liegt die Aufgabe zugrunde, gattungsgemäße Stellventileinrichtungen insbesondere für Strömungsmengenregler von Heizung-Brauchwasser-Anlagen weiterzuentwickeln. Insbesondere liegt der Erfindung die Aufgabe zugrunde, an gattungsgemäßen Stellventileinrichtungen eine Verkeimungsgefahr des sich in dem Brauchwasserkreislauf befindlichen Brauchwassers zu verringern und idealerweise zur Gänze zu vermeiden.

Diese Aufgaben der Erfindung werden von einer Stellventileinrichtung eines Strömungsmengenreglers eines Brauchwasserkreislaufs einer Heizung-Brauchwasser-Anlage mit einem durch einen Brauchwasservolumenstrom ansteuerbaren Brauchwassersteuerkolben und mit einem Arbeitszylinder zum Betätigen des Brauchwassersteuerkolbens gelöst, die die Merkmale des Anspruchs 1 aufweist.

Hierdurch kann der mit dem Brauchwasserkreislauf fluidisch wirkverbundene Arbeitsraum signifikant besser zur Gänze gespült werden, wenn die Stellventileinrichtung aktiv ist, wodurch an der Stellventileinrichtung die Verkeimungsgefahr des Brauchwassers signifikant reduziert ist.

In der Regel ist bei einem kompakt bauenden Strömungsmengenregler zum Regeln von Fluidvolumenströmen einer Heizung-Brauchwasser-Anlage der Brauchwassersteuerkolben mit einem Heizwassersteuerkolben verbunden, so dass ein Heizwasservolumenstrom einer Heizwasserkreislauf seitigen, weiteren Stellventileinrichtung des Strömungsmengenreglers in Abhängigkeit des die Brauchwasserkreislauf seitige Stellventileinrichtung durchströmenden Brauchwasservolumenstroms geregelt werden kann.

Zum Wirkverbinden der beiden Steuerkolben ist meistens ein starr ausgebildetes Betätigungselement vorgesehen, worüber der Arbeitszylinder dann auch mit dem Heizwassersteuerkolben wechselwirkt.

Insofern umfasst die vorliegende Stellventileinrichtung bevorzugt auch ein solches Betätigungselement zum Betätigen des Heizwassersteuerkolbens in Abhängigkeit von einer Ansteuerung des Brauchwassersteuerkolbens.

An dieser Stelle sei noch erwähnt, dass die Begriffe "steuern" und "regeln" im Sinne der Erfindung synonym verwendet werden.

Vorzugsweise umfasst der Arbeitszylinder ein mechanisches Rückstellelement zum Rückstellen des Brauchwassersteuerkolbens aus einer Steuerposition heraus in seine Ruheposition hinein, wobei das Rückstellelement dann in einem Rückstellelement-Aufnahmeraum des Arbeitszylinders untergebracht ist, wie später noch ausführlicher beschrieben ist.

Erfindungsgemäß ist vorgesehen, dass der Arbeitsraum gegenüber seinem Ausgangsvolumen in Ruheposition des Brauchwassersteuerkolbens um mehr als 90 %, vorzugsweise um mehr als 95 %, verringert ist, wenn der Brauchwassersteuerkolben gemäß seiner axialen Verlagerungsrichtung in seiner maximalen Steuerposition hinein verlagert ist.

Durch einen derart stark verkleinerten Arbeitsraum des Arbeitszylinders, der mit dem Brauchwasserkanal fluidisch verbunden ist, kann die Verkeimungsgefahr besonders effektiv verringert werden.

Insofern ist es auch vorteilhaft, wenn der Totraum zwischen dem Arbeitszylindergehäuse und dem Trennelement ein Totraumvolumen aufweist, welches weniger als 10 % oder weniger als 5 %, vorzugsweise weniger als 3 %, des Arbeitsraum-Ausgangsvolumens in der Ruheposition des Brauchwassersteuerkolbens beträgt.

Konstruktiv einfach wird die gewünschte Reduzierung dieses mit Brauchwasserkreislauf fluidisch verbundenen Arbeitsraums erreicht, indem das Trennelement in Gänze mit dem Brauchwassersteuerkolben verlagerbar ist.

Hierdurch ist das Trennelement derart fest ausgebildet, dass alle Bereiche des Trennelements mit einer axialen Verlagerung des Brauchwassersteuerkolbens beschleunigbar sind. Mit anderen Worten bedeutet dies, dass bei einer Verlagerung des Brauchwassersteuerkolbens alle Bereiche des Trennelement gleichzeitig und insbesondere gleichmäßig beschleunigt werden können.

Um in Gänze, also vollständig, innerhalb des Arbeitszylinders verlagerbar zu sein, ist es erforderlich, dass das Trennelement gegenüber einem Arbeitszylindergehäuse, insbesondere einer Laufbuchse des Arbeitszylinders, lose angeordnet ist. Also das Trennelement ist in diesem Fall in keiner Stelle ortsfest mit dem Arbeitszylindergehäuse verbunden. Um dies zu realisieren, ist es erfindungsgemäß vorgesehen, dass das Trennelement vollständig eigensteif ausgestaltet ist.

Da das Trennelement vollständig eigensteif ausgestaltet ist, kann das Trennelement ferner sehr druckstabil realisiert werden und ein in dem Rückstellelement-Aufnahmeraum befindliches Brauchwasser kann durch eine Verlagerung des Brauchwassersteuerkolbens besonders effektiv heraus gespült werden, oder vice versa.

Es versteht sich, dass der mit dem Brauchwasserkreislauf fluidisch wirkverbundene Arbeitsraum unterschiedlich gestaltet sein kann, um den Brauchwassersteuerkolben in Abhängigkeit von einem Brauchwasservolumenstrom innerhalb eines Brauchwasserkanals der Stellventileinrichtung ansteuern zu können.

Wenn dieser Aufnahmeraum sogleich ein Rückstellelement-Aufnahmeraum ist, in welchem sich ein Rückstellelement zum Rückstellen des Brauchwasserkolbens in seine Ruheposition hinein befindet, kann die Stellventileinrichtung noch kompakter gebaut werden.

Es ist somit von Vorteil, dass das verschiebliche Trennelement den Rückstellelement-Aufnahmeraum möglichst stark verkleinert, wenn der Brauchwassersteuerkolben gemäß seiner axialen Verlagerungsrichtung in seiner maximalen Steuerposition hinein verlagert ist, wodurch ein Totraum zwischen einem Arbeitszylindergehäuse und dem Trennelement innerhalb dieses Rückstellelement maximal verkleinert wird.

Dadurch, dass der Totraum zwischen dem Brauchwassersteuerkolben bzw. insbesondere dem Trennelement und einer Begrenzung bzw. einer Außenwandung insbesondere des Brauchwassersteuerkolben-Aufnahmeraums idealerweise minimiert werden kann, wird ein sich in diesem Brauchwassersteuerkolben-Aufnahmeraum befindliches Brauchwasserreservoir hieraus nahezu vollständig ausgespült, wenn der Brauchwassersteuerkolben in eine Steuerposition mit maximaler Auslenkung verfährt.

Jedenfalls verbleibt nur eine sehr geringe Restwassermenge in dem verbleibenden Totraum zurück, welche sich nach Rückverlagerung des Brauchwassersteuerkolbens in seine Ausgangsposition mit wieder nachströmenden frischen Brauchwasser vermischt.

Insofern wird der Brauchwassersteuerkolben-Aufnahmeraum bei jeder Betätigung des Brauchwassersteuerkolbens bzw. des Strömungsmengenreglers bestmöglich ausgespült, wodurch die Verkeimungsgefahr an der Stellventileinrichtung nahezu vollständig ausgeschlossen ist.

Hierzu ist der Rückstellelement-Aufnahmeraum mittels wenigstens einer Verbindungsleitung fluidisch mit dem Brauchwasserkreislauf verbunden, so dass Frische Brauchwasser von dem Brauchwasserstrom in den Arbeitszylinder gelangen kann und vice versa.

Der Brauchwassersteuerkolben-Aufnahmeraum wird um mehr als 90%, vorzugsweise um mehr als 95%, seines maximalen Volumens reduziert, wenn der Brauchwassersteuerkolben maximal ausgelenkt ist.

Das maximale Volumen besitzt der Brauchwassersteuerkolben-Aufnahmeraum dann, wenn sich der Brauchwassersteuerkolben in seiner Ruheposition befindet, also wenn kein Brauchwasservolumenstrom durch die Stellventileinrichtung hindurchfließt.

Im Umkehrschluss bedeutet dies, dass der Totraum ein maximales Totraumvolumen aufweist, welches maximal 10% oder 5%, oder weniger des maximalen Volumens des Brauchwassersteuerkolben-Aufnahmeraums aufweist.

Im Gegensatz zu herkömmlichen Trennelementen, wie etwa Membranelementen, ist das vorliegende Trennelement starr ausgebildet.

Insbesondere der Brauchwassersteuerkolben-Aufnahmeraum kann konstruktiv auf sehr einfache Weise möglichst stark verkleinert werden, wenn das Trennelement einen umlaufenden äußeren Kragen aufweist, welcher zumindest teilweise in eine Arbeitszylindergehäuse seitige Nische zwischen einem Arbeitszylindergehäuse seitigen Rückstellelement-Haltesteg und einer Umfangsinnenwand des Arbeitszylindergehäuses eintauchbar ist, wenn der Brauchwassersteuerkolben in einer Steuerposition, insbesondere in seiner maximalen Steuerposition, verlagert ist. Somit ist auch der Totraum auf ein Minimum reduzierbar.

Das Trennelement kann besonders nahe an das Arbeitszylindergehäuse angeordnet werden, wenn der umlaufende äußere Kragen des Trennelements bezogen auf die axiale Verlagerungsrichtung radial weiter außen angeordnet ist als der Arbeitszylindergehäuse seitige Rückstellelement-Haltesteg. Auch hierdurch kann eine signifikante Totraumreduzierung erreicht werden.

Ist der Arbeitszylindergehäuse seitige Rückstellelement-Haltesteg zumindest teilweise in das Trennelement einsteckbar, wenn der Brauchwassersteuerkolben in einer Steuerposition, insbesondere in seiner maximalen Steuerposition, hinein verlagert ist, kann das Trennelement noch weiter an die Begrenzung bzw. die Innenseite der Außenwandung des Brauchwassersteuerkolben-Aufnahmeraums heran platziert werden. Hierdurch kann der Totraum ebenfalls gut verkleinert werden.

Ferner ist es vorteilhaft, wenn das Trennelement eine Aufnahmenut zum Aufnehmen eines Arbeitszylindergehäuse-seitigen Rückstellelement-Haltestegs umfasst, so dass dieser Arbeitszylindergehäuse seitige Rückstellelement-Haltesteg zumindest teilweise innerhalb des Trennelements anordenbar ist, wenn der Brauchwassersteuerkolben in einer Steuerposition, insbesondere in seiner maximalen Steuerposition, verlagert ist. Hierdurch lassen sich das Trennelement und das Arbeitszylindergehäuse sehr nahe aneinander heran verlagern, so dass der Totraum besonders klein gehalten werden kann.

Es auch vorgesehen, dass das Trennelement an seinem äußeren Umfang Gleitflächen ausgestaltet hat, mittels welchen das Trennelement entlang Innenflächen des Arbeitszylindergehäuses gleitet. Hierdurch kann das Trennelement lose an einer Arbeitszylinderlauffläche anliegen. Insofern ist keine ortsfeste Verbindungstelle zwischen dem Arbeitszylindergehäuse und dem darin beweglich angeordneten Trennelement erforderlich.

Ferner kann der Brauchwassersteuerkolben aufgrund der Gleitflächen besonders feinfühlig auf unterschiedliche Brauchwasservolumenströme reagieren, die durch die Stellventileinrichtung fließen.

Es versteht sich, dass ein Gehäuseteil der Stellventileinrichtung bzw. Innenflächen des Arbeitszylindergehäuses komplementäre Gleitflächen zu den Gleitflächen am Trennelement umfassen.

Der Brauchwassersteuerkolben bzw. dessen Trennelement kann gegenüber dem Arbeitszylindergehäuse durch geeignete Dichtelemente, wie etwa eine O-Ring-Dichtung oder dergleichen, abgedichtet werden, so dass keine Flüssigkeit seitlich am Trennelement vorbeiströmen kann.

Eine besonders hohe Dichtsicherheit kann an dem Trennelement erzielt werden, wenn das Trennelement eine X-Ring-Dichtung oder eine Quad-Ring-Dichtung umfasst. Mittels eines derartigen Dichtelements können selbst auf engstem Bauraum zwei eng nebeneinander liegende Dichtungsebenen realisiert werden.

In der Regel umfassen diese Art von Dichtungen noch mindestens einen Stützring, der vorliegend das Führungsverhalten des Trennelements innerhalb der Stellventileinrichtung noch verbessern kann.

Ein diesbezügliches Dichtungselement ist konstruktiv einfach an dem Brauchwassersteuerkolben anordenbar, wenn es in einer in dem Trennelement eingebrachten Umfangsnut angeordnet ist.

Es hat sich des Weiteren als äußerst zweckmäßig erwiesen, wenn wenigstens teilweise Flächen, insbesondere Wasserkontaktflächen, Gleitflächen oder dergleichen, von Bauteilen der

Stellventileinrichtung, wie speziell das Trennelement, Innenflächen des Arbeitszylindergehäuses oder dergleichen, Beschichtungen, insbesondere Antihaft-, Gleit-, und/oder Korrosionsbeschichtungen, wie etwa Xylan^{©}-Beschichtungen 8110/G0975 grey/black oder ähnlichem, aufweisen.

Insbesondere hinsichtlich mit Brauchwasser in Kontakt kommenden Flächen können vorteilhaft durch derartige Beschichtungen ausgestaltet werden, da hierdurch die Gefahr einer Kontamination des Brauchwassers durch Abrieb oder dergleichen verringert werden kann. Dies gilt besonders für Brauchwasser umspülte Bereiche.

Ferner können derartige Flächen besonders gut vor unerwünschten Anhaftungen und damit auch vor Verschmutzungen geschützt werden.

Außerdem kann hierdurch konstruktiv einfach für eine Reibungsreduzierung zwischen zueinander beweglichen Bauteilen gesorgt werden, so dass auch das Ansprechverhalten der Stellventileinrichtung im Gesamten verbessert werden kann.

Diese Effekte und Vorteile haben ebenfalls Gültigkeit speziell hinsichtlich sonstiger Kolbenlaufflächen einer in einem Gehäuse einer Stellventileinrichtung eingesetzten Hülse oder dergleichen.

Das vorliegende Trennelement kann darüber hinaus nahezu aus beliebigen Materialien hergestellt sein. Besonders leicht kann es bereitgestellt werden, wenn das Trennelement aus einem Kunststoffmaterial oder einem Compound hieraus, insbesondere aus Polyoxymethylen (POM), hergestellt ist.

Insofern kann hierdurch das Ansprechverhalten der Stellventileinrichtung weiter verbessert werden.

Ferner kann das Trennelement hierdurch mit sehr guten thermisch isolierenden Eigenschaften ausgestattet werden, so dass auch die Gefahr einer unerwünschten Erwärmung des sich in dem Rückstellelement-Aufnahmeraum befindlichen Brauchwassers erheblich reduziert ist. Beispielsweise kann hierdurch der Rückstellelement-Aufnahmeraum gegenüber dem Betätigungselement zum Betätigen des Heizungssteuerkolbens innewohnende Wärmeenergie isoliert werden, da das Betätigungselement oftmals durch Heizwasser erwärmt wird, welches durch eine weitere Stellventileinrichtung eines Heizwasserkreislaufs des Strömungsmengenreglers fließt.

Die Aufgabe der Erfindung wird ebenfalls von einem Strömungsmengenregler mit Stellventileinrichtungen zum Regeln von Fluidvolumenströmen einer Heizung-Brauchwasser-Anlage gelöst, wobei sich der Strömungsmengenregler durch eine Stellventileinrichtung nach einem der hier erläuterten Merkmale auszeichnet.

Ist ein Strömungsmengenregler mit der vorliegenden Stellventileinrichtung ausgerüstet, kann er nicht nur hinsichtlich einer Verkeimungsgefahr wesentlich betriebssicherer betrieben werden.

Die Begrifflichkeit "Stellventileinrichtung" beschreibt eine Steuerkolben führende Einrichtung mit einem Gehäuse, durch welches entweder Brauchwasser auf der Brauchwasserkreislaufseite oder Heizwasser auf der Heizwasserkreislaufseite geführt ist.

Insofern zeichnet sich ein Strömungsmengenregler durch eine Stellventileinrichtung eines Brauchwasserkreislaufs und durch mindestens eine weitere Stellventileinrichtung eines Heizwasserkreislaufs aus.

Mittels der Steuerkolben werden die Durchflussmengen des jeweiligen Fluides eingestellt.

Der jeweilige Steuerkolben sitzt hierbei zumindest teilweise quer in einem Brauchwasserkanal der ersten Stellventileinrichtung - Brauchwassersteuerkolben - oder in einem Heizwasserkanal der weiteren Stellventileinrichtung - Heizwassersteuerkolben -, um den jeweiligen Kanal entweder vollständig zu verschließen oder bedarfsweise öffnen.

Insofern stellen der Brauchwassersteuerkolben und der Heizwassersteuerkolben Messgliedes Strömungsmengenreglers bzw. der jeweiligen Stellventileinrichtung dar, mittels welchen der Brauchwasservolumenstrom oder der Heizwasservolumenstrom gemessen bzw. eingestellt werden kann.

Somit umfasst der Strömungsmengenregler mindestens zwei Stellventileinrichtungen, nämlich eine auf Seiten des Brauchwasserkreislaufs und eine auf Seiten des Heizwasserkreislaufs.

Der Begriff "Betätigungselement" bezeichnet ein Führungsstangenelement oder dergleichen, welches einen Sanitärsteuerkolben der ersten Stellventileinrichtung auf Seiten des Brauchwasserkreislaufs und einen Heizwassersteuerkolben der weiteren Stellventileinrichtung auf Seiten des Heizwasserkreislaufs miteinander verbindet, so dass diese Steuerkolben bevorzugt synchron zueinander bewegt werden können.

Die Aufgabe der Erfindung wird darüber hinaus auch von einer Heizung-Brauchwasser-Anlage zum Erwärmen von Brauchwasser mit einem Strömungsmengenregler zum Regeln eines Heizwasservolumenstroms in Abhängigkeit von einem an wenigstens einer Zapfstelle angeforderten Brauchwasservolumenstrom gelöst, wobei sich die Heizung-Brauchwasser-Anlage durch die hier vorliegende Stellventileinrichtung oder den hier vorliegenden Strömungsmengenregler auszeichnet.

Ist eine Heizung-Brauchwasser-Anlage mit dem vorliegenden Strömungsmengenregler bzw. mit der vorliegenden Stellventileinrichtung ausgerüstet, kann die Heizung-Brauchwasser-Anlage nicht nur hinsichtlich einer Verkeimungsgefahr wesentlich betriebssicherer betrieben werden.

Weitere Effekte und Vorteile vorliegender Erfindung werden anhand anliegender Zeichnung erläutert, in welcher beispielhaft eine Stellventileinrichtung bzw. ein diesbezüglicher Strömungsmengenregler und weitere Bauteile hiervon dargestellt und beschrieben sind.

In der Zeichnung zeigen:
- Figur 1: schematisch eine längsgeschnittene Ansicht einer ersten Stellventileinrichtung eines Brauchwasserkreislaufs und einer hiermit zu einem Strömungsmengenregler gekoppelten weiteren Stellventileinrichtung eines Heizwasserkreislaufs;
- Figur 2: schematisch eine längsgeschnittene Ansicht der in der Figur 1 gezeigten Brauchwasserkreislauf seitigen, ersten Stellventileinrichtung mit ihrem Brauchwassersteuerkolben in einer Ruheposition;
- Figur 3: schematisch eine weitere längsgeschnittene Ansicht der in der Figur 2 gezeigten ersten Stellventileinrichtung mit dem Brauchwassersteuerkolben in der maximalen Steuerposition;
- Figur 4: schematisch eine längsgeschnittene Ansicht eines Trennelements des Brauchwassersteuerkolbens der in den Figuren 1 bis 3 gezeigten ersten Stellventileinrichtung;
- Figur 5: schematisch eine perspektivische Ansicht des in der Figur 4 gezeigten Trennelements;
- Figur 6: schematisch eine längsgeschnittene Ansicht eines Brauchwassersteuerelements des Brauchwassersteuerkolbens der in den Figuren 1 bis 3 gezeigten ersten Stellventileinrichtung;
- Figur 7: schematisch eine perspektivische Ansicht des in der Figur 6 gezeigten Brauchwassersteuerelements;
- Figur 8: schematisch noch eine perspektivische Ansicht des insbesondere in der Figur 1 gezeigten Strömungsmengenreglers.

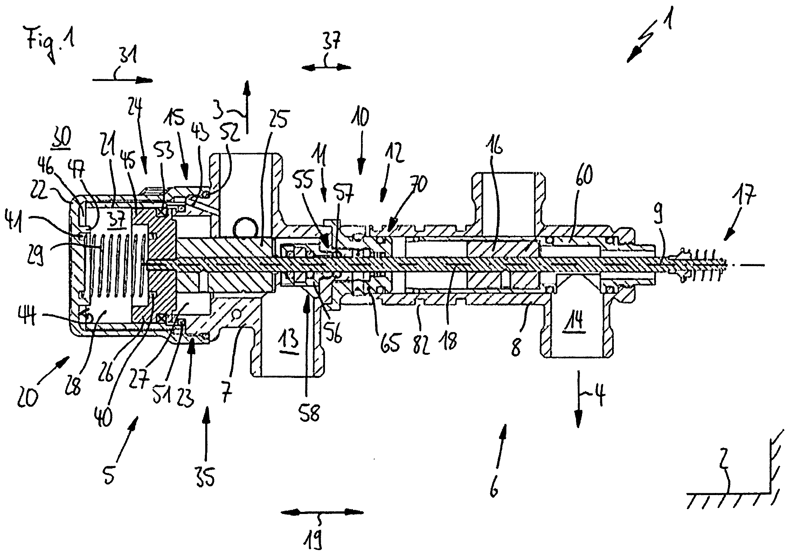

Der insbesondere in der Figur 1 gezeigte Strömungsmengenregler 1 ist Bestandteil einer hier nicht weiter gezeigten Heizung-Brauchwasser-Anlage 2, mit deren Hilfe in einem Gebäude (nicht gezeigt) an einer ebenfalls nicht dargestellten Zapfstelle angefordertes Brauchwasser unter Verwendung von Heizwasser einer Heizung erwärmt bzw. erhitzt wird.

Somit wird mittels des vorliegenden Strömungsmengenreglers 1 in Abhängigkeit von einer an der Zapfstelle angeforderten Menge an warmen Brauchwasser eine erforderliche Menge von Heizungswasser derart durch einen Wärmeübertrager (nicht gezeigt) der Heizung-Brauchwasser-Anlage 2 hindurch geleitet, dass hierbei das Brauchwasser durch das Heizungswasser erwärmt bzw. erhitzt werden kann. Solche Wärmeübertrager sind aus dem Stand der Technik gut bekannt. Insofern wird die Heizung-Brauchwasser-Anlage 2 diesbezüglich nicht weiter erläutert.

Im Allgemeinen dient der Strömungsmengenregler 1 also zum Steuern bzw. Regeln von Fluidvolumenströmen 3 der Heizung-Brauchwasser-Anlage 2, nämlich von einem Brauchwasservolumenstrom 3 und einem Heizwasservolumenstrom 4.

An dieser Stelle sei nochmals darauf hingewiesen, dass die Begrifflichkeiten "Steuern" und "Regeln" im Sinne vorliegender Erfindung synonym verwendet werden.

Der Strömungsmengenregler 1 zeichnet sich durch zwei Stellventileinrichtungen 5 und 6 aus, wobei die erste Stellventileinrichtung 5 in einem Brauchwasserkreislauf (hier nicht explizit gezeigt und beziffert) der Heizung-Brauchwasser-Anlage 2 integriert ist, durch welchen hindurch der Brauchwasservolumenstrom 3 fließt. Der Brauchwasserkreislauf ist hierbei offen, da an Zapfstellen Brauchwasser entnommen werden kann.

Ferner zeichnet sich der Strömungsmengenregler 1 durch die weitere Stellventileinrichtung 6 aus, welche dementsprechend in einem Heizwasserkreislauf (ebenfalls nicht dargestellt und explizit beziffert) der Heizung-Brauchwasser-Anlage 2 integriert ist, in welchem letztendlich der Heizungswasservolumenstrom 4 umgewälzt wird. Insofern ist der Heizwasserkreislauf geschlossen.

Damit ist die erste Stellventileinrichtung 5 der Sanitärseite (nicht beziffert) und die weitere Stellventileinrichtung 6 der Heizungsseite (nicht beziffert) der Heizung-Brauchwasser-Anlage 2 zugeordnet.

Die erste Stellventileinrichtung 5 weist ein erstes Gehäuse Teil 7 des Strömungsmengenreglers 1 und die weitere Stellventileinrichtung 6 ein weiteres Gehäuseteil 8 des Strömungsmengenreglers 1 auf, welche sich entlang der Mittellinie 9 des Strömungsmengenreglers 1 erstrecken.

Beide Gehäuseteile 7 und 8 sind in einem Gehäusekoppelbereich 10 miteinander verbunden; das bedeutet, die erste Stellventileinrichtung 5 besitzt eine Koppelseite 11, an welcher das weitere Gehäuse 8 der weiteren Stellventileinrichtung 6 befestigt ist. Im Umkehrschluss bedeutet dies, dass die weitere Stellventileinrichtung 6 eine Koppelseite 12 aufweist, an welcher das erste Gehäuseteil 7 der ersten Stellventileinrichtung 5 befestigt ist.

Insofern sind die beiden Stellventileinrichtungen 5 und 6 in dem Gehäusekoppelbereich 10 fest, aber lösbar miteinander zu dem Strömungsmengenregler 1 verbunden.

Ferner zeichnet sich der Strömungsmengenregler 1 hinsichtlich der ersten Stellventileinrichtung 5 durch einen Brauchwasserkanal 13 und hinsichtlich der weiteren Stellventileinrichtung 6 durch einen Heizwasserkanal 14 aus.

Der Brauchwasserkanal 13 kann mittels eines Brauchwassersteuerkolbens 15 der ersten Stellventileinrichtung 5 verschlossen oder geöffnet werden. Genauso verhält es sich bezüglich des Heizwasserkanals 14, welcher mit Hilfe eines Heizwassersteuerkolbens 16 der weiteren Stellventileinrichtung 6 verschließbar oder öffenbar ist.

Der Brauchwassersteuerkolben 15 wird innerhalb der ersten Stellventileinrichtung 5 in Richtung der Mittellinie 9 axial verlagert, um den Brauchwasservolumenstrom 3 zu steuern, welcher durch die erste Stellventileinrichtung 5 fließen kann.

Der Brauchwassersteuerkolben 15 stellt im Sinne der Erfindung ein Brauchwassermessglied (nicht explizit beziffert) dar.

Der Brauchwassersteuerkolben 15 ist im Zusammenhang mit einem Strömungsmengenregler 1 einer Heizung-Brauchwasser-Anlage 2 oftmals auch als Sanitärsteuerkolben bezeichnet.

Dementsprechend umfasst die weitere Stellventileinrichtung 6 einen Heizwassersteuerkolben 16, oftmals auch Heizungssteuerkolben bezeichnet, mittels welchem ein Heizungswasservolumenstrom 4 regelbar ist, welcher durch die weitere Stellventileinrichtung 6 fließen kann.

Der Heizwassersteuerkolben 16 ist ein Heizwassermessglied (nicht nochmals beziffert).

Der Brauchwassersteuerkolben 15 und der Heizwassersteuerkolben 16 sind mittels eines gemeinsamen Betätigungselements 17 zum gleichzeitigen Betätigen beider Steuerkolben 15 und 16 des Strömungsmengenreglers 1 miteinander wirkverbunden.

Das Betätigungselement 17 ist bevorzugt als starres Führungsstangenelement 18 ausgestaltet, wie in diesem konkreten Ausführungsbeispiel gezeigt.

Das Betätigungselement 17 ist, wie die Steuerkolben 15 und 16, in Längsrichtung 19 des Strömungsmengenreglers 1 bzw. der Stellventileinrichtungen 5 und 6 axial verlagerbar.

Die erste Stellventileinrichtung 5 umfasst zudem einen Arbeitszylinder 20 mit einer zylindrischen Laufbuchse 21, welche mittels eines Arbeitszylindergehäuses 22 an dem ersten Gehäuseteil 7 der ersten Stellventileinrichtung 5 befestigt.

Der Arbeitszylinder 20 dient insbesondere der Betätigung des Brauchwassersteuerkolbens 15 sowie des Heizwassersteuerkolbens 16 der weiteren Stellventileinrichtung 6.

Das Arbeitszylindergehäuses 22 ist in diesem Ausführungsbeispiel als ein Deckelteil gestaltet und es ist auf einem Gewindeabsatz 23 des ersten Gehäuseteils 11 aufgeschraubt.

Der Arbeitszylinder 20 stellt an der ersten Stellventileinrichtung 5 einen Arbeitsraum 24 für den Brauchwassersteuerkolben 15 bereit, in welchem der Brauchwassersteuerkolben 15 zumindest teilweise angeordnet ist.

Der Arbeitsraum 24 wird hierbei von dem zylindrischen Arbeitszylindergehäuse 21, von dem Arbeitszylindergehäuse 22 bzw. Deckelteil sowie von dem ersten Gehäuseteil 11 umgrenzt.

Der Brauchwassersteuerkolben 15 ist in ein axial verschiebliches Brauchwassersteuerelement 25 und in ein axial verschiebliches Trennelement 26 gegliedert, wobei das Trennelement 26 den Arbeitsraum 24 in einen Brauchwassersteuerelement-Aufnahmeraum 27 einerseits und in einen weiteren Arbeitsraum 28 andererseits unterteilt, in welchem zumindest in diesem Ausführungsbeispiel ein Rückstellelement 29 zum Halten des Brauchwassersteuerkolbens 15 untergebracht ist.

Insofern handelt es sich bei dem weiteren Arbeitsraum 28 um einen Rückstellelement-Aufnahmeraum 28.

Während der Brauchwassersteuerkolben 15 hier zweistückig ausgebildet ist, ist es hinsichtlich einer anderen Ausführungsvariante jedoch auch möglich, das Brauchwassersteuerelement 25 und das Trennelement 26 einstückig herzustellen.

Gegebenenfalls kann zwischen dem eigentlichen Brauchwassersteuerkolben 15 und dem hieran befestigten Trennelement 26 auch eine Distanzbuchse (hier nicht gezeigt) angeordnet sein, um das Trennelement 26 beabstandet von dem Brauchwassersteuerelement 25 zu haltern, wenn dies bei einer Variante der Stellventileinrichtung vorteilhaft erscheint.

Jedenfalls ist der Arbeitszylinder 20 derart aufgebaut, dass der Brauchwassersteuerelement-Aufnahmeraum 27 dem Gehäuseteil 11 der ersten Stellventileinrichtung 5 zugewandt ist, während der Rückstellelement-Aufnahmeraum 28 an einer diesem Gehäuseteil 11 abgewandten Seite 30 des Trennelements 26 bzw. des Brauchwassersteuerelements 25 angeordnet ist.

Das Rückstellelement 29 drückt mittels seiner Federkraft 31 speziell den Brauchwassersteuerkolben 15 axial nach rechts in seine Ruheposition 35, wobei sich das Rückstellelement 29 einerseits an dem Trennelement 26 und andererseits an dem Arbeitszylindergehäuse 22 bzw. Deckelteil abstützt.

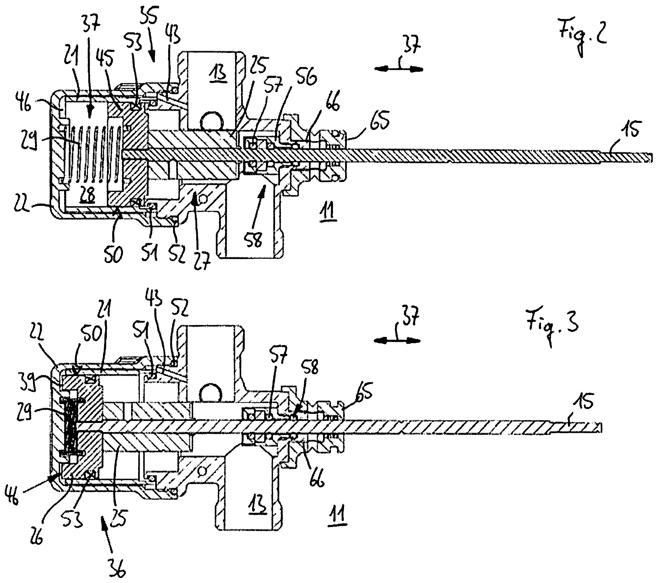

In dieser Ruheposition 35 ist die erste Stellventileinrichtung 5 verschlossen, wie gemäß der Darstellung nach den Figuren 1 und 2 gezeigt ist.

Das Rückstellelement 29 wird mittels des aufschraubbaren Arbeitszylindergehäuses 22 bzw. Deckelteils gegenüber dem Trennelement 26 bzw. dem Brauchwassersteuerkolben 15 verspannt, und zwar derart, dass der Brauchwassersteuerkolben 15 in seiner Ruheposition 35 (vgl. insbesondere Figur 2) positioniert ist, solange an einer Zapfstelle kein warmes Brauchwasser angefordert wird und dementsprechend auch kein Brauchwasservolumenstrom 3 durch die erste Stellventileinrichtung 5 strömt.

Da der Brauchwassersteuerkolben 15 und der Heizwassersteuerkolben 16 mittels des gemeinsamen Betätigungselements 17 starr miteinander verbunden sind, ist auch der Heizwasserkanal 14 durch den Heizwassersteuerkolben 16 verschlossen, wenn kein Brauchwasservolumenstrom 3 durch die erste Stellventileinrichtung 5 strömt.

Sobald jedoch aufgrund einer betätigten Zapfstelle der Heizung-Brauchwasser-Anlage 2 Brauchwasser durch die erste Stellventileinrichtung 5 strömt, bewegt sich der Brauchwassersteuerkolben 15 entgegen der Federkraft 31 nach links in eine Steuerposition 36 (vgl. Figur 3, maximale Steuerposition 36) hinein, welche von der Ruheposition 35 verschieden ist.

Gemäß der Darstellung nach der Figur 3 befindet sich der Brauchwassersteuerkolben 15 in der maximal möglichen nach links verlagerten Steuerposition 36, bei welcher auch der maximale Brauchwasservolumenstrom 3 durch die erste Stellventileinrichtung 5 strömen kann. Genauso verhält es sich hierbei hinsichtlich des Heizwassersteuerkolbens 16 an der weiteren Stellventileinrichtung 6.

Jedenfalls ist das Trennelement 26 innerhalb des Arbeitszylinders 20 derart verschieblich angeordnet, dass der weitere Arbeitsraum 28 möglichst stark verkleinert ist, wenn der Brauchwassersteuerkolben 15 gemäß seiner axialen Verlagerungsrichtung 37 in dieser maximalen Steuerposition 36 hinein verlagert ist.

Genauer gesagt ist der weitere Arbeitsraum 28 gegenüber seinem Ausgangsvolumen 38 in Ruheposition 35 des Brauchwassersteuerkolbens 15 um mehr als 95 % verringert, wenn sich der Brauchwassersteuerkolben 15 in der maximalen Steuerposition 36 befindet.

In diesem Ausführungsbeispiel ist das verschiebliche Trennelement 26 kumulativ auch derart ausgestaltet, dass es den weiteren Arbeitsraum 28 bzw. den Rückstellelement-Aufnahmeraum 28 größtmöglich verkleinert, wenn der Brauchwassersteuerkolben 15 gemäß seiner axialen Verlagerungsrichtung 37 in der maximalen Steuerposition 36 hinein verlagert ist, wodurch der Totraum 39 (nur exemplarisch beziffert, siehe nur Figur 3) zwischen dem Arbeitszylindergehäuse 22 bzw. und dem Trennelement 26 innerhalb dieses Rückstellelement-Aufnahmeraums 27 minimiert, aber zumindest signifikant reduziert ist.

Das Volumen des Totraums 39 beträgt in diesem Ausführungsbeispiel lediglich noch 5 % des Ausgangsvolumens 38 des weiteren Arbeitsraums 28 bzw. des Rückstellelement-Aufnahmeraums 28, wenn sich der Brauchwassersteuerkolben 15 in seiner Ruheposition 35 befindet.

Das Rückstellelement 29 ist innerhalb des Rückstellelement-Aufnahmeraums 28 definiert gehalten, da sowohl das Trennelement 26 als auch das Arbeitszylindergehäuse 22 bzw. Deckelteil jeweils mit einer Halteringnut 40 bzw. 41 ausgestattet ist, in welchen das Rückstellelement 30 jeweils mit einem seiner Enden (hier nicht explizit beziffert) eingreift und fixiert ist.

Der Arbeitsraum 24, insbesondere der Rückstellelement-Aufnahmeraum 28, ist mit dem Brauchwasserkanal 13 mittels einer Verbindungsleitung 43 fluidisch verbunden.

Sobald nun Brauchwasser an einer Zapfstelle angefordert wird und hierdurch ein Brauchwasservolumenstrom 3 initiiert wird, führt dies zu einem Druckabfall in dem weiteren Arbeitsraum 28 bzw. insbesondere in dem Rückstellelement-Aufnahmeraum 28, wodurch der gesamte Brauchwassersteuerkolben 15 mitsamt des Trennelements 26 entgegen der Federkraft 31 axial nach links verlagert wird, wobei diese Nach-Links-Verlagerung so lange anhält, bis das Trennelement 26 gegen die innere Kopfseite 44 des Arbeitszylindergehäuses 22 bzw. Deckelteils 22 anstößt (siehe Figur 3).

Der verbleibende Totraum 39 zwischen der inneren Kopfseite 44 und dem Trennelement 26 ist hierbei derart ausreichend groß dimensioniert, dass es das gestauchte Rückstellelement 29 aufnehmen kann.

Das Trennelement 26 weist einen umlaufenden äußeren Kragen 45 auf, welcher in diesem Ausführungsbeispiel ringförmig konzentrisch um die Mittelinie 9 herum angeordnet ist.

Der äußere Kragen 45 ist zumindest teilweise in eine Arbeitszylindergehäuse 22 seitige Nische 46 zwischen einem Arbeitszylindergehäuse 22 seitigen Rückstellelement-Haltesteg 47 und einer Umfangsinnenwand 48 des Arbeitszylindergehäuses 22 eintauchbar, wenn der Brauchwassersteuerkolben 15 insbesondere in seiner maximalen Steuerposition 36 verweilt.

In dieser maximalen Steuerposition 36 des Brauchwassersteuerkolbens 15 ist dann nicht nur der Brauchwasserkanal 13 maximal weit geöffnet, sondern auch der Heizwasserkanal 14, da der Heizwassersteuerkolben 16 und der Brauchwassersteuerkolben 15 mittels des Betätigungselements 17 mechanisch verbunden sind, so dass der Heizwassersteuerkolben 16 stets mit dem Brauchwasserkolben 15 mitgeschleppt wird.

Der umlaufende äußere Kragen 45 des Trennelements 26 ist bezogen auf die Mittellinie 9 bzw. auf die axiale Verlagerungsrichtung 37 radial weiter außen angeordnet als der Arbeitszylindergehäuse 22 seitige Rückstellelement-Haltesteg 47.

Die Nische 46 ist vorliegend ebenfalls ringförmig ausgebildet, so dass der äußere Kragen 45 problemlos in diese Nische 46 eintauchen kann.

Dementsprechend ist auch der Rückstellelement-Haltesteg 47 ringförmig an dem Arbeitszylindergehäuse 22 ausgeformt.

Der Brauchwasserkolben 15 kann zur Minimierung des Totraums 39 besonders nahe an das Arbeitszylindergehäuse 22 herangebracht werden, da in das Trennelement 26 eine Aufnahmenut 49 zum Aufnehmen des Rückstellelement-Haltestegs 47 eingebracht ist.

Diese Aufnahmenut 49 ist in diesem Fall eine scheibenartige Materialausnehmung (nicht gesondert beziffert).

Das verschiebliche Trennelement 26 gestaltet an seinem äußeren Umfang Gleitflächen 50 aus, mittels welchen es entlang Innenflächen (nicht gesondert beziffert) des Arbeitszylindergehäuses 22, insbesondere der zylindrischen Laufbuchse 21, gleitet.

Insbesondere diese Gleitfläche 50 ist mit einer Xylan^{©}-Beschichtung 8110/G0975 grey/black ausgestattet, so dass zu überwindende Wiederstände hinsichtlich einer Verlagerung des Brauchwassersteuerkolbens 15 signifikant reduziert werden können. Hierdurch kann die Stellventileinrichtung 5 besonders leichtgängig und exakt arbeiten.

Darüber hinaus reduziert die Xylan^{©}-Beschichtung 8110/G0975 grey/black ebenfalls die Verkeimungsgefahr des sich insbesondere innerhalb des weiteren Arbeitsraums 28 bzw. Rückstellelement-Aufnahmeraums befindlichen Brauchwassers weiter.

Das zylindrische Arbeitszylindergehäuse 22 bzw. das Deckelteil sind gegenüber dem ersten Gehäuseteil 11 jeweils mittels einer O-Ring-Dichtung 51 bzw. 52 abgedichtet.

Eine Abdichtung des Brauchwassersteuerkolbens 15 bzw. des Trennelements 26 gegenüber der zylindrischen Laufbuchse 21 erfolgt in diesem Ausführungsbeispiel mittels einer X-Ring-Dichtung 53, welche in einer an dem Trennelement 26 realisierten Umfangsnut 54 angeordnet ist.

Ferner ist das erste Gehäuseteil 11 an einer Betätigungselementdurchführung 55 mittels einer Stopfbuchse 56 abgedichtet, wobei die Stopfbuchse 56 gegenüber dem Betätigungselement 17 einerseits und dem ersten Gehäuseteil 11 andererseits mittels O-Ring-Dichtungen 57 (hier nur insgesamt beziffert) aufweisenden Dichtungseinrichtungen 58 abgedichtet ist.

Mittels dieser Dichtungseinrichtungen 58 ist die erste Stellventileinrichtung 5 brauchwasserseitig auch gegenüber der weiteren Stellventileinrichtung 6 fluidisch abgedichtet.

Die weitere Stellventileinrichtung 6 umfasst eine Innenhülse 60, in welcher der Heizungswassersteuerkolben 16 gleitet.

Um die beiden Stellventileinrichtungen 5 und 6 nun thermisch besonders gut voneinander zu entkoppeln, um hierdurch eine Wärmeübertragung zwischen den beiden Gehäuseteilen 11 und 12 zumindest reduzieren können, weist der Strömungsmengenregler 1 ein Koppelteil 65 auf, dessen thermische Leitfähigkeit geringer ist als die der Gehäuseteile 11 und 12.

Das Koppelteil 65 ist in dem Gehäusekoppelbereich 10 vorgesehen, wobei das erste Gehäuseteil 11 und das weitere Gehäuseteil 12 durch das Koppelteil 65 fest, aber lösbar miteinander verbunden sind.

Das Koppelteil 65 ist an der Koppelseite 11 des ersten Gehäuseteils 7 auf ein Außengewinde 66 eines an dem ersten Gehäuseteil 7 ausgeprägten Aufnahmezapfens 67 geschraubt, wie gemäß den Darstellungen nach den Figuren 2 und 3 deutlicher zu erkennen ist.

Das Koppelteil 65 ist an der Koppelseite 12 des weiteren Gehäuseteils 8 in eine Aufnahmebuchse 70 eingesteckt (siehe nur Figur 1).

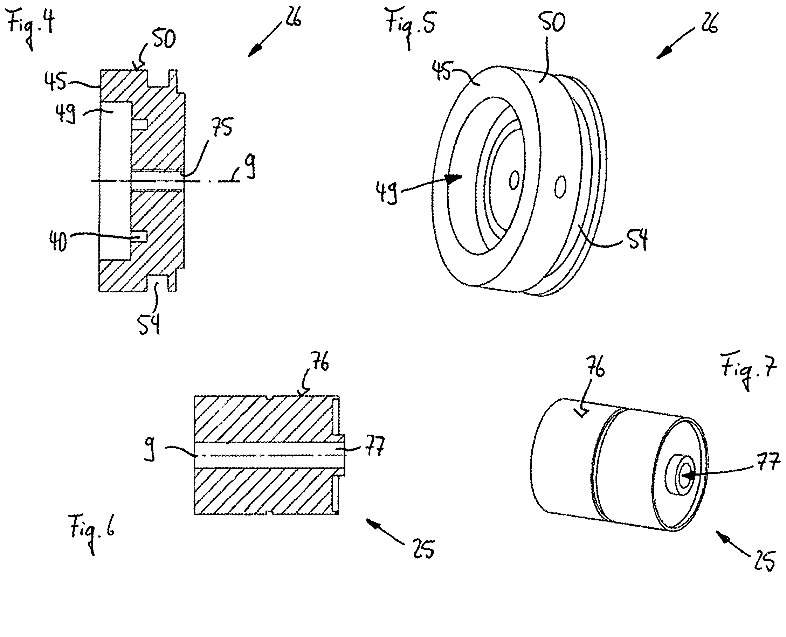

Gemäß den Darstellungen nach den Figuren 4 bis 7 ist der vorliegende Brauchwassersteuerkolben 15 mit seinen zwei Komponenten Brauchwassersteuerelement 25 und Trennelement 26 nochmals detaillierter gezeigt.

Während der hier eingesetzte Brauchwassersteuerkolben 15 noch zweiteilig ausgebildet ist, kann er in anderen Ausführungen auch einteilig hergestellt sein, das heißt, dass das Brauchwassersteuerelement 25 und das Trennelement 26 dann als ein einziges Teil hergestellt sind.

Zumindest das Trennelement 26 ist vorliegend aus Polyoxymethylen (POM) hergestellt, so dass der weitere Arbeitsraum 28 bzw. der Rückstellelement-Aufnahmeraum 28 gegenüber dem Brauchwassersteuerkolben 15 besonders gut isoliert ist.

Aber auch der komplette Brauchwassersteuerkolben 15 kann aus Polyoxymethylen (POM) hergestellt sein, wenn dies für eine Ausführungsform vorteilhaft erscheint.

Das Brauchwassersteuerelement 25 und das Trennelement 26 können hierbei miteinander verklebt werden, um den Brauchwassersteuerkolben 15 in Gänze darzustellen.

Hierbei sind aber auch Lösungen möglich, bei welchen das Brauchwassersteuerelement 25 und das Trennelement 26 kumulativ oder alternativ verschraubt oder sonst wie in geeigneter Weise miteinander zusammengefügt sind.

Mittig an dem Trennelement 26 ist noch eine Gewindebohrung 75 vorgesehen, mittels welcher das Trennelement 26 und damit auch der Brauchwassersteuerkolben 15 auf ein Ende (nicht explizit beziffert) des gemeinsamen Betätigungselements 17 aufschraubbar ist.

Nicht nur die äußere Gleitfläche 50 des Trennelements 26 weist eine Xylan^{©}-Beschichtung 8110/G0975 grey/black, sondern vorteilhafterweise auch die mit Brauchwasser in Kontakt kommenden übrigen Oberflächenbereiche (nicht explizit beziffert) des Trennelements 26 sind hiermit ausgestattet.

Ferner weisen auch die mit dem Brauchwasser in Kontakt tretenden Oberflächen 76 (nur exemplarisch beziffert) des mit dem Trennelement 26 verbundenen Brauchwassersteuerelements 25 eine derartige Xylan^{©}-Beschichtung 8110/G0975 grey/black auf.

Zum Aufnehmen des Betätigungselements 17 ist durch das Brauchwassersteuerelement 25 eine Durchgangsbohrung 77 hindurchgebohrt, wobei diese Durchgangsbohrung 77 zusätzlich auch ein Gewinde (nicht gezeigt) tragen könnten, so dass das Betätigungselement 17 im Bedarfsfall auch ein- bzw. durchgeschraubt sein könnte.

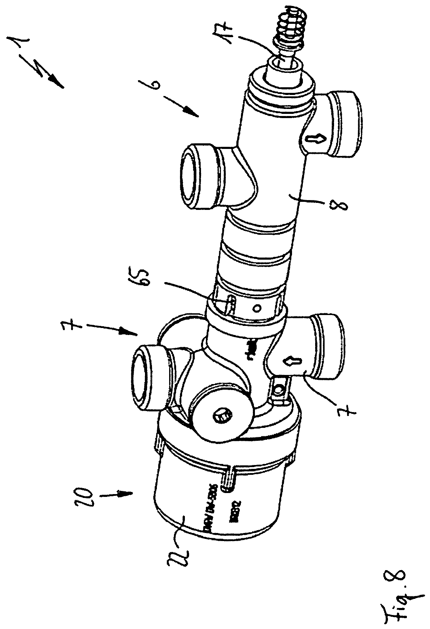

Gemäß der Darstellung nach der Figur 8 ist der vorliegende Strömungsmengenregler 1 nochmals in einer perspektivischen Ansicht dargestellt, wobei das erste Gehäuseteil 7 der ersten Stellventileinrichtung 5 mittels des Koppelteils 65 (nahezu vollständig verdeckt) mit dem weiteren Gehäuseteil 8 der weiteren Stellventileinrichtung 6 fest, aber lösbar sowie thermisch entkoppelt miteinander verbunden sind.

Das erste Gehäuseteil 7 gehört der ersten Stellventileinrichtung 5 an, mittels welcher der Brauchwasservolumenstrom 3 gesteuert bzw. geregelt wird.

Links am Strömungsmengenregler 1 ist gut das Arbeitszylindergehäuse 22 bzw. Deckelteil 22 des Arbeitszylinders 20 der ersten Stellventileinrichtung 5 zu erkennen.

Rechts an dem Strömungsmengenregler 1 im Bereich der weiteren Stellventileinrichtung 6 ist noch ein Ende des Betätigungselements 17 erkennbar, welches rechts aus dem Strömungsmengenregler 1 bzw. aus der weiteren Stellventileinrichtung 6 hinausragt.

Es versteht sich, dass es sich bei den in der Zeichnung gezeigten Ausführungsbeispielen lediglich um erste Ausgestaltungen der erfindungsgemäßen Stellventileinrichtung, des Strömungsmengenreglers bzw. deren oder dessen Bauteile handelt. Insofern beschränkt sich die Ausgestaltung der Erfindung nicht auf diese Ausführungsbeispiele.

### Bezugszeichenliste

- 1: Strömungsmengenregler
- 2: Heizung-Brauchwasser-Anlage
- 3: Brauchwasservolumenstrom
- 4: Heizwasservolumenstrom
- 5: erste Stellventileinrichtung
- 6: weitere Stellventileinrichtung
- 7: erstes Gehäuseteil
- 8: weiteres Gehäuseteil
- 9: Mittellinie
- 10: Gehäusekoppelbereich
- 11: Koppelseite des ersten Gehäuseteils
- 12: Koppelseite des weiteren Gehäuseteils
- 13: Brauchwasserkanal bzw. Brauchwasserkreislauf
- 14: Heizwasserkanal bzw. Heizwasserkreislauf
- 15: Brauchwassersteuerkolben bzw. Sanitärsteuerkolben
- 16: Heizwassersteuerkolben bzw. Heizungssteuerkolben
- 17: gemeinsames Betätigungselement
- 18: Führungsstangenelement
- 19: Längsrichtung
- 20: Arbeitszylinder
- 21: zylindrisches Laufbuchse
- 22: Arbeitszylindergehäuse bzw. Deckelteil
- 23: Gewindeabsatz
- 24: Arbeitsraum
- 25: Brauchwassersteuerelement
- 26: Trennelement
- 27: Brauchwassersteuerelement-Aufnahmeraum
- 28: weiterer Arbeitsraum bzw. Rückstellelement-Aufnahmeraum
- 29: Rückstellelement
- 30: abgewandte Seite
- 31: Federkraft
- 35: Ruheposition
- 36: Steuerposition
- 37: Verlagerungsrichtung
- 38: Ausgangsvolumen
- 39: Totraum
- 40: erste Halteringnut
- 41: weitere Halteringnut
- 43: Verbindungsleitung
- 44: innere Kopfseite
- 45: äußerer Kragen
- 46: Nische
- 47: Rückstellelement-Haltesteg
- 48: Umfangsinnenwand
- 49: Aufnahmenut
- 50: Gleitflächen
- 51: innere O-Ring-Dichtung
- 52: äußere O-Ring-Dichtung
- 53: X-Ring-Dichtung
- 54: Umfangsnut
- 55: Betätigungselementdurchführung
- 56: Stopfbuchse
- 57: O-Ring-Dichtungen
- 58: Dichtungseinrichtungen
- 60: Innenhülse
- 65: Koppelteil
- 66: Außengewinde
- 67: Aufnahmezapfen
- 70: Aufnahmebuchse
- 75: Gewindebohrung
- 76: Oberflächen
- 77: Durchgangsbohrung

## Patentansprüche

1. Stellventileinrichtung (5) eines Strömungsmengenreglers (1) eines Brauchwasserkreislaufs (13) einer Heizung-Brauchwasser-Anlage (2), mit einem durch einen Brauchwasservolumenstrom (3) ansteuerbaren Brauchwassersteuerkolben (15) und mit einem Arbeitszylinder (20) zum Betätigen des Brauchwassersteuerkolbens (15), bei welcher innerhalb des Arbeitszylinders (20) ein Trennelement (26) angeordnet ist, um einen mit dem Brauchwasserkreislauf (13) fluidisch verbundenen Arbeitsraum (28) innerhalb des Arbeitszylinders (20) räumlich abzutrennen, wobei
- der Arbeitsraum (28) als Rückstellelement-Aufnahmeraum (23) ausgebildet ist, in welchem ein Rückstellelement (29) zum Rückstellen des Brauchwassersteuerkolbens (15) aus einer Steuerposition heraus in seine Ruheposition hinein untergebracht ist und welcher mittels wenigstens einer Verbindungsleitung fluidisch mit dem Brauchwasserkreislauf verbunden ist,
- das Trennelement (26) innerhalb des Arbeitszylinders (20) derart verschieblich angeordnet und ausgestaltet ist, dass es den Arbeitsraum (28) als Rückstellelement-Aufnahmeraum möglichst stark verkleinert, wenn der Brauchwassersteuerkolben (15) gemäß seiner axialen Verlagerungsrichtung (37) in seiner maximalen Steuerposition (36) hinein verlagert ist, wodurch ein Totraum (39) zwischen einem Arbeitszylindergehäuse (22) des Arbeitszylinders (20) und dem Trennelement (26) innerhalb des Rückstellelements (29) maximal verkleinert werden kann, **dadurch gekennzeichnet, dass**
- der Arbeitsraum (28) gegenüber seinem Ausgangsvolumen (38) in Ruheposition (35) des Brauchwassersteuerkolbens (15) um mehr als 90 %, vorzugsweise um mehr als 95 %, verringert ist, wenn der Brauchwassersteuerkolben (15) gemäß seiner axialen Verlagerungsrichtung (37) in seiner maximalen Steuerposition (36) hinein verlagert ist,
- das Trennelement (26) in Gänze mit dem Brauchwassersteuerkolben (15) verlagerbar ist,
- das Trennelement (26) vollständig eigensteif ist, und
- das Trennelement (26) an seinem äußeren Umfang Gleitflächen (50) ausgestaltet, mittels welchen das Trennelement (26) entlang Innenflächen des Arbeitszylindergehäuses (22) gleitet.

2. Stellventileinrichtung (5) nach Anspruch *1, **dadurch gekennzeichnet, dass*** der Totraum (39) zwischen dem Arbeitszylindergehäuse (22) und dem Trennelement (26) ein Totraumvolumen aufweist, welches weniger als 5 %, vorzugsweise weniger als 3 %, des Arbeitsraum-Ausgangsvolumens (38) in der Ruheposition (35) des Brauchwassersteuerkolbens (15) beträgt.

3. Stellventileinrichtung (5) nach einem der Ansprüche 1 bis 2, ***dadurch gekennzeichnet, dass*** das Trennelement (26) einen umlaufenden äußeren Kragen (45) aufweist, welcher zumindest teilweise in eine Arbeitszylindergehäuse (22) seitige Nische (46) zwischen einem Arbeitszylindergehäuse (22) seitigen Rückstellelement-Haltesteg (47) und einer Umfangsinnenwand (48) des Arbeitszylindergehäuses (22) eintauchbar ist, wenn der Brauchwassersteuerkolben (15) in einer Steuerposition (36), insbesondere in seiner maximalen Steuerposition (36), verlagert ist.

4. Stellventileinrichtung (5) nach Anspruch 3, ***dadurch gekennzeichnet, dass*** der umlaufende äußere Kragen (45) des Trennelements (26) bezogen auf die axiale Verlagerungsrichtung (37) des Brauchwassersteuerkolbens (15) radial weiter außen angeordnet ist als der Arbeitszylindergehäuse (22) seitige Rückstellelement-Haltesteg (47).

5. Stellventileinrichtung (5) nach Anspruch 3 oder 4, ***dadurch gekennzeichnet, dass*** der Arbeitszylindergehäuse (22) seitige Rückstellelement-Haltesteg (47) zumindest teilweise in das Trennelement (26) einsteckbar ist, wenn der Brauchwassersteuerkolben (15) in einer Steuerposition (36), insbesondere in seiner maximalen Steuerposition (36), hinein verlagert ist.

6. Stellventileinrichtung (5) nach einem der Ansprüche 1 bis 5, ***dadurch gekennzeichnet, dass*** das Trennelement (26) eine Aufnahmenut (49) zum Aufnehmen eines Arbeitszylindergehäuse (22) seitigen Rückstellelement-Haltestegs (47) umfasst, so dass dieser Arbeitszylindergehäuse (22) seitige Rückstellelement-Haltesteg (47) zumindest teilweise innerhalb des Trennelements (26) anordenbar ist, wenn der Brauchwassersteuerkolben (15) in einer Steuerposition (36), insbesondere in seiner maximalen Steuerposition (36), verlagert ist.

7. Stellventileinrichtung (5) nach einem der Ansprüche 1 bis 6, ***dadurch gekennzeichnet, dass*** das Trennelement (26) eine X-Ring-Dichtung (53) oder eine Quad-Ring-Dichtung umfasst, welche insbesondere in einer in dem Trennelement (26) eingebrachten Umfangsnut (54) angeordnet ist.

8. Stellventileinrichtung (5) nach einem der Ansprüche 1 bis 7, ***dadurch gekennzeichnet, dass*** wenigstens teilweise Flächen, insbesondere Wasserkontaktflächen (76), Gleitflächen (50) oder dergleichen, von Bauteilen der Stellventileinrichtung (5, 6), wie speziell das Trennelement (26), Innenflächen des Arbeitszylindergehäuses (22) oder dergleichen, Beschichtungen, insbesondere Antihaft-, Gleit-, und/oder Korrosionsbeschichtungen, aufweisen.

9. Stellventileinrichtung (5) nach einem der Ansprüche 1 bis 8, ***dadurch gekennzeichnet, dass*** das Trennelement (26) aus einem Kunststoffmaterial oder einem Compound hieraus, insbesondere aus Polyoxymethylen (POM), hergestellt ist.

10. Strömungsmengenregler (1) für eine Heizugn-Brauchwasser-Anlage (2) mit Stellventileinrichtungen (5, 6) zum Regeln von Fluidvolumenströmen (3, 4) der Heizung-Brauchwasser-Anlage *(2), **gekennzeichnet durch*** wenigstens eine Stellventileinrichtung (5) nach einem der vorhergehenden Ansprüche.

11. Heizung-Brauchwasser-Anlage (2) zum Erwärmen von Brauchwasser mit wenigstens einer Zapfstelle und mit einem Strömungsmengenregler (6) zum Regeln eines Heizwasservolumenstroms (4) in Abhängigkeit von einem an der wenigstens einen Zapfstelle angeforderten Brauchwasservolumenstrom *(3), **gekennzeichnet durch*** eine Stellventileinrichtung (5) nach einem der Ansprüche 1 bis 9 oder einen Strömungsmengenregler (1) nach Anspruch 10.

## Claims

1. Positioning control valve device (5) of a flow rate regulator (1) of a process water circuit (13) of a heating-process water system (2), having a process water control piston (15) which is able to be actuated by a process water volumetric flow (3), and having a working cylinder (20) for activating the process water control piston (15), in which positioning control valve device a separating element (26) is disposed within the working cylinder (20) so as to spatially separate a working space (28) which is within the working cylinder (20) and fluidically connected to the process water circuit (13), wherein
- the working space (28) is designed as a restoring element receptacle space (23), in which a restoring element (29) for restoring the process water control piston (15) from a control position to its resting position is accommodated, and which is fluidically connected to the process water circuit by means of at least one connecting line,
- the separating element (26) is disposed and designed so as to be displaceable within the working cylinder (20) in such a manner that it reduces the working space (28) as the restoring element receptacle space as much as possible when the process water control piston (15) is displaced in accordance with its axial displacement direction (37) to its maximum control position (36), as a result of which a dead space (39) between a working cylinder housing (22) of the working cylinder (20) and the separating element (26) within the restoring element (29) can be reduced to the maximum, ***characterized in that***
- the working space (28) is reduced by more than 90%, preferably by more than 95%, compared to its initial volume (38) in the resting position (35) of the process water control piston (15) when the process water control piston (15) is displaced in accordance with its axial displacement direction (37) to its maximum control position (36),
- the separating element (26) can be displaced in its entirety by the process water control piston (15),
- the separating element (26) is completely inherently rigid, and
- the separating element (26) is designed on its outer circumference with sliding surfaces (50) by means of which the separating element (26) slides along the inner surfaces of the working cylinder housing (22).

2. Positioning control valve device (5) according to Claim 1, ***characterized in* that** the dead space (39) between the working cylinder housing (22) and the separating element (26) has a dead space volume which is less than 5%, preferably less than 3%, of the working space initial volume (38) in the resting position (35) of the process water control piston (15).

3. Positioning control valve device (5) according to one of Claims 1 to 2, ***characterized in* that** the separating element (26) has an encircling outer collar (45) which is able to plunge at least partially into a working cylinder housing (22) proximal niche (46) between a working cylinder housing (22) proximal restoring element retaining web (47) and an internal circumferential wall (48) of the working cylinder housing (22) when the process water control piston (15) is displaced to a control position (36), in particular to its maximum control position (36).

4. Positioning control valve device (5) according to Claim 3, ***characterized in* that** the encircling outer collar (45) of the separating element (26) in terms of the axial displacement direction (37) of the process water control piston (15) is disposed radially further outside than the working cylinder housing (22) proximal restoring element retaining web (47).

5. Positioning control valve device (5) according to Claim 3 or 4, ***characterized in* that** the working cylinder housing (22) proximal restoring element retaining web (47) is able to be inserted at least partially into the separating element (26) when the process water control piston (15) is displaced to a control position (36), in particular to its maximum control position (36).

6. Positioning control valve device (5) according to one of Claims 1 to 5, ***characterized in* that** the separating element (26) comprises a receptacle groove (49) for receiving a working cylinder housing (22) proximal restoring element retaining web (47) in such a way that this working cylinder housing (22) proximal restoring element retaining web (47) is able to be disposed at least partially within the separating element (26) when the process water control piston (15) is displaced to a control position (36), in particular to its maximum control position (36).

7. Positioning control valve device (5) according to one of Claims 1 to 6, ***characterized in* that** the separating element (26) comprises an X-ring seal, (53) or a quad-ring seal, which is disposed in particular in a circumferential groove (54) incorporated in the separating element (26).

8. Positioning control valve device (5) according to one of Claims 1 to 7, ***characterized in that*** at least part of the surfaces, in particular water contact surfaces (76), sliding surfaces (50) or the like, of components of the positioning control valve device (5, 6), such as specifically the separating element (26), inner surfaces of the working cylinder housing (22) or the like, have coatings, in particular non-stick, sliding and/or corrosion coatings.

9. Positioning control valve device (5) according to one of Claims 1 to 8, ***characterized in that*** the separating element (26) is made of a plastics material or a compound thereof, in particular of polyoxymethylene (POM).

10. Flow rate regulator (1) for a heating-process water system (2), having positioning control valve devices (5, 6) for regulating fluid volumetric flows (3, 4) of the heating-process water system (2), ***characterized by*** at least one positioning control valve device (5) according to one of the preceding claims.

11. Heating-process water system (2) for heating process water, having at least one tap and having a flow rate regulator (6) for regulating a heating water volumetric flow (4) as a function of a process water volumetric flow (3) requested at the at least one tap, ***characterized by*** a positioning control valve device (5) according to one of Claims 1 to 9 or by a flow rate regulator (1) according to Claim 10.

## Revendications

1. Dispositif de soupape de réglage (5) d'un régulateur de débit (1) d'un circuit d'eau sanitaire (13) d'une installation de chauffage et d'eau sanitaire (2), avec un piston de commande d'eau sanitaire (15) pouvant être commandé par un débit volumique d'eau sanitaire (3) et avec un cylindre de travail (20) pour actionner le piston de commande d'eau sanitaire (15), dans lequel un élément de séparation (26) est agencé à l'intérieur du cylindre de travail (20) pour séparer spatialement un espace de travail (28) relié fluidiquement au circuit d'eau sanitaire (13) à l'intérieur du cylindre de travail (20),
- l'espace de travail (28) étant réalisé sous forme d'espace de réception d'élément de rappel (23), dans lequel est logé un élément de rappel (29) pour le rappel du piston de commande d'eau sanitaire (15) d'une position de commande à sa position de repos et qui est relié fluidiquement au circuit d'eau sanitaire au moyen d'au moins une conduite de liaison,
- l'élément de séparation (26) étant agencé et conçu de manière à pouvoir être déplacé à l'intérieur du cylindre de travail (20) de telle sorte qu'il réduit le plus possible l'espace de travail (28) en tant qu'espace de réception d'élément de rappel lorsque le piston de commande d'eau industrielle (15) est déplacé dans sa position de commande maximale (36) selon sa direction de déplacement axiale (37), ce qui permet de réduire au maximum un espace mort (39) entre un carter de cylindre de travail (22) du cylindre de travail (20) et l'élément de séparation (26) à l'intérieur de l'élément de rappel *(29), **caractérisé en ce que***
- l'espace de travail (28) est réduit de plus de 90 %, de préférence de plus de 95 **%,** par rapport à son volume initial (38) dans la position de repos (35) du piston de commande d'eau sanitaire (15), lorsque le piston de commande d'eau sanitaire (15) est déplacé selon sa direction de déplacement axiale (37) dans sa position de commande maximale (36),
- l'élément de séparation (26) peut être déplacé dans son intégralité avec le piston de commande d'eau sanitaire (15),
- l'élément de séparation (26) est entièrement auto-rigide, et
- l'élément de séparation (26) est conçu avec des surfaces de glissement (50) sur sa périphérie extérieure, au moyen desquelles l'élément de séparation (26) glisse le long de surfaces intérieures du carter de cylindre de travail (22).

2. Dispositif de soupape de réglage (5) selon la revendication 1, ***caractérisé en ce que*** l'espace mort (39) entre le carter de cylindre de travail (22) et l'élément de séparation (26) présente un volume d'espace mort qui est inférieur à 5 %, de préférence inférieur à 3 **%, du** volume initial de l'espace de travail (38) dans la position de repos (35) du piston de commande d'eau sanitaire (15).

3. Dispositif de soupape de réglage (5) selon l'une quelconque des revendications 1 à 2, ***caractérisé en ce que*** l'élément de séparation (26) présente une collerette extérieure périphérique (45), qui peut s'enfoncer au moins partiellement dans une niche (46) située du côté du carter de cylindre de travail (22) entre une nervure de retenue d'élément de rappel (47) située du côté du carter de cylindre de travail (22) et une paroi intérieure périphérique (48) du carter de cylindre de travail (22) lorsque le piston de commande d'eau sanitaire (15) est déplacé dans une position de commande (36), notamment dans sa position de commande maximale (36).

4. Dispositif de soupape de réglage (5) selon la revendication 3, ***caractérisé en ce que*** la collerette extérieure périphérique (45) de l'élément de séparation (26) est agencée radialement plus à l'extérieur, par rapport à la direction de déplacement axiale (37) du piston de commande d'eau sanitaire (15), que la nervure de retenue (47) de l'élément de rappel située du côté du carter de cylindre de travail (22).

5. Dispositif de soupape de réglage (5) selon la revendication 3 ou 4, ***caractérisé en ce que*** la nervure de retenue d'élément de rappel (47) située du côté du carter de cylindre de travail (22) peut être insérée au moins partiellement dans l'élément de séparation (26) lorsque le piston de commande d'eau sanitaire (15) est déplacé vers l'intérieur dans une position de commande (36), notamment dans sa position de commande maximale (36).

6. Dispositif de soupape de réglage (5) selon l'une quelconque des revendications 1 à 5, ***caractérisé en ce que*** l'élément de séparation (26) comprend une rainure de réception (49) pour recevoir une nervure de retenue d'élément de rappel (47) située du côté du carter de cylindre de travail (22), de telle sorte que cette nervure de retenue d'élément de rappel (47) située du côté du carter de cylindre de travail (22) peut être agencée au moins partiellement à l'intérieur de l'élément de séparation (26) lorsque le piston de commande d'eau sanitaire (15) est déplacé dans une position de commande (36), notamment dans sa position de commande maximale (36).

7. Dispositif de soupape de réglage (5) selon l'une quelconque des revendications 1 à 6, ***caractérisé en ce que*** l'élément de séparation (26) comprend un joint annulaire X (53) ou un joint annulaire Quad, qui est notamment agencé dans une rainure périphérique (54) ménagée dans l'élément de séparation (26).

8. Dispositif de soupape de réglage (5) selon l'une quelconque des revendications 1 à 7, ***caractérisé en ce* qu'**au moins une partie des surfaces, notamment des surfaces de contact avec l'eau (76), des surfaces de glissement (50) ou similaires, de composants du dispositif de soupape de réglage (5, 6), comme en particulier l'élément de séparation (26), les surfaces intérieures du carter de cylindre de travail (22) ou similaires, présentent des revêtements, notamment des revêtements antiadhérents, de glissement et/ou de corrosion.

9. Dispositif de soupape de réglage (5) selon l'une quelconque des revendications 1 à 8, ***caractérisé en ce que*** l'élément de séparation (26) est fabriqué en un matériau plastique ou en un composé de celui-ci, notamment en polyoxyméthylène (POM).

10. Régulateur de débit (1) pour une installation de chauffage et d'eau sanitaire (2) avec des dispositifs de soupape de réglage (5, 6) pour la régulation de débits volumiques de fluide (3, 4) de l'installation de chauffage et d'eau sanitaire (2), ***caractérisé par*** au moins un dispositif de soupape de réglage (5) selon l'une quelconque des revendications précédentes.

11. Installation de chauffage et d'eau sanitaire (2) pour chauffer de l'eau sanitaire avec au moins un point de soutirage et avec un régulateur de débit (6) pour réguler un débit volumétrique d'eau de chauffage (4) en fonction d'un débit volumétrique d'eau sanitaire (3) demandé à l'au moins un point de soutirage, ***caractérisé par*** un dispositif de soupape de réglage (5) selon l'une quelconque des revendications 1 à 9 ou un régulateur de débit (1) selon la revendication 10.
